(19) Europäisches Patentamt
European Patent Office
Office européen des brevets

(11) **EP 2 551 379 A1**

(12) **EUROPEAN PATENT APPLICATION**
published in accordance with Art. 153(4) EPC

(43) Date of publication:
**30.01.2013 Bulletin 2013/05**

(51) Int Cl.:
***C25B 1/02*** *(2006.01)*

(21) Application number: **11759576.9**

(22) Date of filing: **25.03.2011**

(86) International application number:
**PCT/JP2011/057360**

(87) International publication number:
**WO 2011/118772 (29.09.2011 Gazette 2011/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2010 JP 2010070275**

(71) Applicants:
• **Hiroshima University
Hiroshima 739-8511 (JP)**
• **Sophia School Corporation
Tokyo 102-8554 (JP)**

(72) Inventors:
• **KOJIMA Yoshitsugu
Higashi-Hiroshima-shi
Hiroshima 739-8530 (JP)**

• **ICHIKAWA Takayuki
Higashi-Hiroshima-shi
Hiroshima 739-8530 (JP)**
• **SUZUKI Hiroshi
Tokyo 102-8554 (JP)**
• **HANADA Nobuko
Tsukuba-shi
Ibaraki 305-8573 (JP)**

(74) Representative: **Epping - Hermann - Fischer
Patentanwaltsgesellschaft mbH
Ridlerstrasse 55
80339 München (DE)**

(54) **HYDROGEN GENERATING METHOD, HYDROGEN USE METHOD, AND ELECTRICITY GENERATING SYSTEM**

(57)     Hydrogen is generated effectively with a small amount of electrolytic energy. Hydrogen is generated by electrolyzing liquid ammonia to which an electrolyte was added, and the generated hydrogen is reacted with oxygen to generate electricity. Since the electrolytic energy of liquid ammonia is small, a large amount of hydrogen can be generated effectively. The electric energy obtained from hydrogen generated by the electrolysis is greater than that required for the electrolysis of liquid ammonia. Therefore, great electric power can be utilized by converting the electric power obtained from small power source thereto.

FIG.7

**Description**

Technical Field

The present invention relates to a method for generating hydrogen, a method for utilizing hydrogen and an electric generating system.

Background Art

Hydrogen is widely used in various industrial fields including petroleum refining, chemical industry, automobile industry and the like. In recent years especially, hydrogen has been drawing attention as a future energy source, and studies of fuel cells, hydrogen engines and the like are underway.

Water is a liquid substance containing hydrogen in an amount of 11% by mass. As a method for generating hydrogen, electrolysis of water is widely known. However, the electrolysis of water needs energy greater than that obtained by the electrolysis. Therefore, operating a fuel cell by using hydrogen obtained by the electrolysis of water is not profitable.

Patent Literature 1 discloses an electrolytic cell for generating hydrogen, in which cell hydrogen is generated by using aqueous ammonia as hydrogen source.

Prior Art Literature

Patent Literature

Patent Literature 1: Unexamined Japanese Patent Application KOKAI Publication No. 2010-53383

Summary of the Invention

Problems to be Solved by the Invention

In Patent Literature 1, aqueous ammonia is used as hydrogen source. Thus, a part of electric power is consumed for the electrolysis of water during the electrolysis. Since the electrolysis of water needs energy greater than that obtained by the electrolysis, there is also a problem in that hydrogen generation efficiency is low.

Ammonia decomposes at a voltage of 0.077 V in aqueous ammonia. Although this voltage is lower than that in the case of water, the maximum concentration of ammonia in water solution is 47% by mass. Therefore, hydrogen derived from ammonia in an amount not more than half the amount of the hydrogen derived from pure ammonia having the same volume is collected from aqueous ammonia. Thus, hydrogen generation efficiency cannot be increased.

The present invention was made under the above-described matters, and an object of the present invention is to provide a method for generating hydrogen, in which hydrogen is generated efficiently with a small amount of electrolytic energy, a method for utilizing hydrogen and an electric generating system.

Means for Solving the Problems

A method for generating hydrogen according to a first viewpoint of the present invention is characterized in that hydrogen is generated by electrolyzing liquid ammonia to which an electrolyte was added.

The electrolyte is preferably a metal amide.

The metal amide is preferably potassium amide.

The potassium amide is preferably added to a concentration of not less than 1 M and not more than 8 M.

A method for utilizing hydrogen according to a second viewpoint of the present invention is characterized in that electricity is generated by electrochemical reaction between oxygen and hydrogen generated by the method for generating hydrogen according to the first viewpoint of the present invention.

An electric generating system according to a third viewpoint of the present invention is characterized in that the electric generating system comprises a hydrogen generator in which hydrogen is generated by the method for generating hydrogen according to the first viewpoint of the present invention; and an electric generator in which electricity is generated by electrochemical reaction between oxygen and the generated hydrogen.

Effects of the Invention

In the method for generating hydrogen according to the present invention, hydrogen is generated by electrolyzing liquid ammonia to which an electrolyte was added. Since the electrolytic energy of liquid ammonia is small, a large amount of hydrogen can be generated efficiently. The electric energy obtained from hydrogen generated by electrolysis is greater than that required for electrolysis of liquid ammonia. Therefore, great electric power can be utilized by converting the electric power obtained from small power source thereto.

Brief Description of Drawings

FIG. 1 is a schematic view in the case where the generated hydrogen is utilized as a fuel of a fuel cell;
FIG. 2 is a schematic view of a hydrogen engine driver system;
FIG. 3 is XRD spectrum of $KNH_2$ produced in Example ;
FIG. 4 is XRD spectrum of $KNH_2$;
FIG. 5 is a graph showing change with time in electric current and pressure in the cell in Example 1;
FIG. 6 is a measurement result of gas chromatography of gas in the cell in Example 1; and
FIG. 7 is a chart of CV measurement in Example 1, 2 and Comparative Example 1.

Mode for Carrying Out the Invention

The method for generating hydrogen according to an embodiment will now be described. In the method for generating hydrogen, hydrogen is generated by electrolyzing liquid ammonia to which an electrolyte was added.

In this embodiment, anhydrous liquid ammonia is used as liquid ammonia. A negative electrode and a positive electrode are immersed in anhydrous liquid ammonia. Hydrogen can be generated from the negative electrode by connecting a power source such as a battery or the like to the both electrodes and applying voltage thereto.

The electrolysis may be carried out under the condition that anhydrous ammonia is kept liquid. The melting point of ammonia is -77.7°C, and the boiling point thereof is -33.4°C. Thus, in cases where the electrolysis is carried out under normal pressure, the temperature of ammonia may be kept from -77.7°C to -33.4°C. In cases where the electrolysis is carried out under normal temperature, anhydrous ammonia may be kept liquid by increasing pressure. For example, anhydrous ammonia can be kept liquid under the condition of 20°C and 8.5 atm, under which the electrolysis can be carried out.

The electrolyte to be added may be a metal amide having a high solubility in ammonia. The metal amide may be an alkali metal amide such as lithium amide ($LiNH_2$), sodium amide ($NaNH_2$), potassium amide ($KNH_2$) or the like; and an alkaline earth metal amide such as calcium amide ($Ca(NH_2)_2$) or the like. The electrolyte is added at least in an amount that the electrolysis of anhydrous liquid ammonia can be carried out. The amount of the electrolyte to be added is preferably the amount that the electrolyte can be dissolved in anhydrous liquid ammonia as much as possible. For example, in cases where potassium amide is used, the electrolyte may be added to a concentration of not less than 1 M and not more than 8 M.

The reaction occurred at the positive electrode and the negative electrode in the electrolysis of anhydrous liquid ammonia is shown in the following equation:

[formula 1]

$$\text{positive electrode} \quad 3NH_2^- \rightarrow 1/2N_2 + 2NH_3 + 3e^-$$
$$\text{negative electrode} \quad 3NH_3 + 3e^- \rightarrow 3/2H_2 + 3NH_2^-$$
$$\overline{NH_3 \rightarrow 1/2N_2 + 3/2H_2}$$

The theoretical decomposition voltage of ammonia is 0.077 V as shown in the following equation:

[equation 1]

$$E^0 = -\Delta G^0 / 3F + RT \ln(p_{N2}^{1/2} p_{H2}^{3/2}) / 3F$$

$$\Delta G^0 = -10.984 kJ/molNH_3, \quad p_{N2} = p_{H2} = 0.99 MPa$$

On the other hand, the reaction occurred at the positive electrode and the negative electrode in the electrolysis of water is shown in the following equation:

[formula 2]

$$positive\ electrode \quad 2OH^- \rightarrow 1/2O_2 + H_2O + 2e^-$$
$$negative\ electrode \quad 2H_2O + 2e^- \rightarrow H_2 + 2OH^-$$
$$\overline{\qquad\qquad\qquad\qquad\qquad\qquad\qquad\qquad}$$
$$H_2O \rightarrow H_2 + 1/2O_2$$

The theoretical decomposition voltage of water is 1.23 V as shown in the following equation:

[equation 2]

$$E^0 = -\Delta G^0 / 2F$$
$$= 1.23V$$
$$\Delta G^0 = -237.1 kJ/molH_2O$$

Thus, the electric energy required for the electrolysis of ammonia is theoretically not more than 5% of the electric energy required for the electrolysis of water. Further, anhydrous liquid ammonia which does not contain water is used in the embodiment. Therefore, the electric energy used in the electrolysis is not used for the electrolysis of water, and used effectively for the electrolysis of ammonia. By using anhydrous liquid ammonia in this way, a large amount of hydrogen can be generated with a small amount of electric energy.

Then, the method for utilizing hydrogen generated as described above and the electric generating system will now be described.

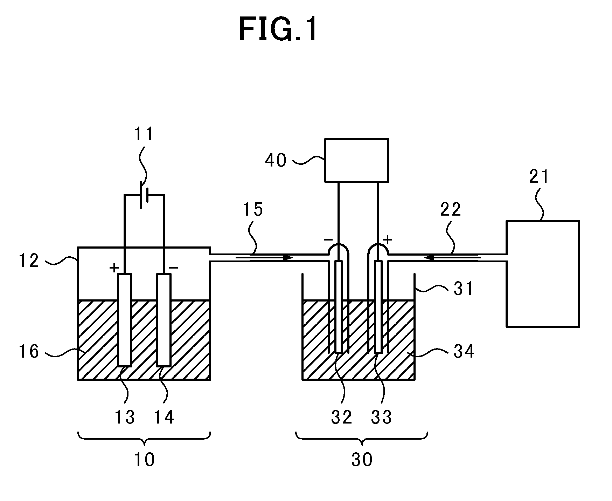

As one Example of the method for utilizing hydrogen, in which electricity is generated by electrochemical reaction between the generated hydrogen and oxygen, and the electric generating system, FIG. 1 shows a schematic view in the case where the generated hydrogen is utilized as a fuel of a fuel cell. Firstly, in the hydrogen generator 10, anhydrous liquid ammonia 16 in the electrolytic tank 12 is electrolyzed to generate hydrogen. When voltage is applied between the positive electrode 13 and the negative electrode 14 by using the power source 11, hydrogen is generated at the negative electrode 14.

The generated hydrogen is supplied to the negative electrode 32 disposed in the redox reactor 31 of the electric generator 30 through the hydrogen supply line 15. On the other hand, oxygen is supplied to the positive electrode 33 disposed in the redox reactor 31 through the oxygen supply line 22 from the oxygen tank 21. Here, the positive electrode 33 and the negative electrode 32 are connected respectively through wirings to the electric apparatus 40 such as a motor, a lighting, an electric storage device or the like.

At the negative electrode 32, hydrogen loses electrons. The electrons released from hydrogen passes through wirings and the electric apparatus 40 to the positive electrode 33, and oxygen received the electrons to be reduced at the positive electrode 33. Thus, electricity can be generated by redox reaction between hydrogen and oxygen to drive the electric apparatus 40. The oxidized hydrogen and the reduced oxygen are converted to water 34.

Hydrogen is generated from anhydrous liquid ammonia 16 by the electrolysis with the power source 11. The fuel cell using the generated hydrogen as a fuel can supply electric power greater than that supplied by the power source 11.

The electric apparatus 40 may be a motor which can run an automobile, and can be utilized for an electric motorcar. By using the method for generating hydrogen according to this embodiment, anhydrous liquid ammonia can be electrolyzed to generate hydrogen with the power source 11, and electricity can be generated with the generated hydrogen to supply electric power to a motor or an electric motorcar. On the other hand, electric power can also be supplied to a motor or an electric motorcar from the power source 11 per se having the same capacity. The travel distance of the electric motorcar using electric power derived from the generated hydrogen becomes longer than that using electric power from the power source 11 per se.

In the electrolysis of anhydrous liquid ammonia 16, nitrogen is also generated in addition to hydrogen. Therefore, it is preferred to separate hydrogen and nitrogen and supply only hydrogen to the negative electrode 32.

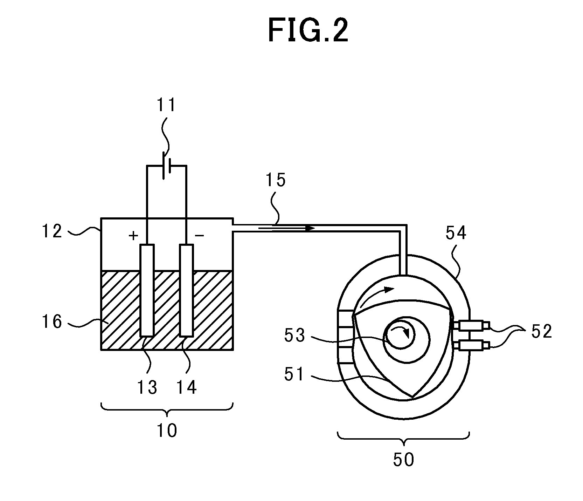

The generated hydrogen can also be utilized for driving a hydrogen engine. As an example, FIG. 2 shows a schematic view of a hydrogen engine driver system in which the generated hydrogen is utilized as a fuel to drive a hydrogen engine. The generated hydrogen is supplied through the hydrogen supply line 15 into the housing 54 in the hydrogen engine 50 in the same manner as described above. Hydrogen is compressed and bums by ignition of the ignition device 52 to rotate the rotor 51. The shaft 53 is rotated by the rotation of the rotor 51, and the rotation of the shaft 53 is transmitted to an axle, thereby running an automobile.

A dynamo may be driven by using the generated hydrogen as a fuel to generate electricity. For example, a motor shaft as a generating equipment is connected to the shaft 53 of the hydrogen engine illustrated with reference to FIG. 2. A motor is an apparatus in which the law of electromagnetic induction is used, and electric energy can be obtained from mechanical energy of rotation. When hydrogen engine is driven by using the above-described generated hydrogen as a fuel, the shaft 53 is rotated. A motor shaft can be rotated by the rotation of the shaft 53. Electricity can be generated by converting the rotational energy of this motor shaft to the electric energy.

Although anhydrous liquid ammonia is used as liquid ammonia in this embodiment, liquid ammonia is not restricted to anhydrous liquid ammonia. Liquid ammonia may contain a small amount of other components such as, for example, water.

Examples

The amount of generated hydrogen by the electrolysis of anhydrous liquid ammonia and the amount of generated hydrogen by the electrolysis of water were compared and verified.

Firstly, $KNH_2$ used as an electrolyte was prepared. Liquid ammonia was added to potassium hydride (KH), and the resulting mixture was left to stand overnight at room temperature to obtain product.

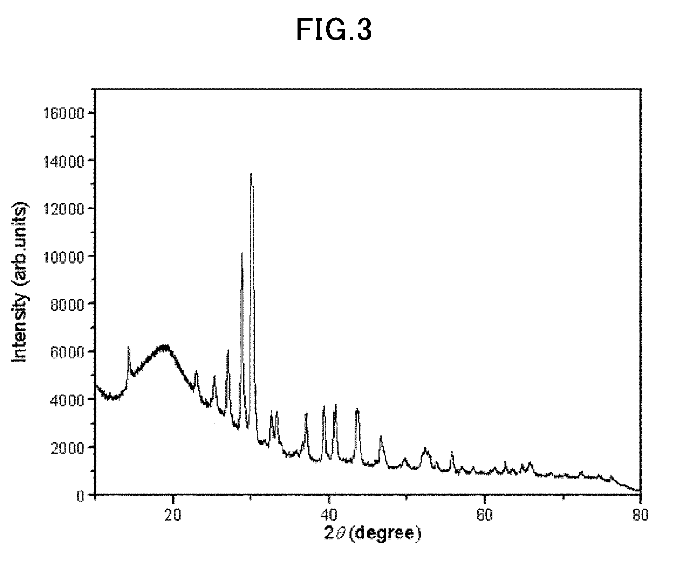

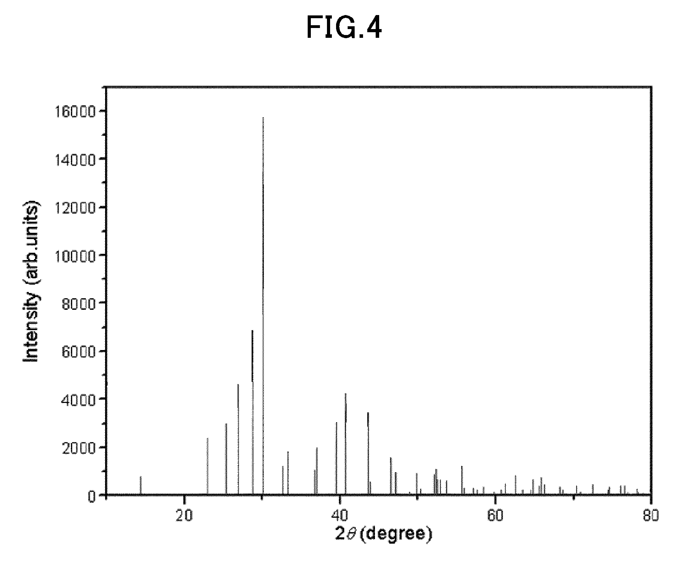

FIG. 3 shows XRD spectrum of the obtained product. FIG. 4 shows XRD peaks of $KNH_2$ as a reference data. Since the peaks observed in XRD spectrum of the product correspond to the XRD peaks of $KNH_2$, the obtained product was confirmed to be $KNH_2$. The prepared $KNH_2$ was used as an electrolyte in the following Examples.

(Example 1)

Electrolysis of anhydrous liquid ammonia was carried out, and electrochemical property was estimated by constant voltage measurement and cyclic voltammetry (CV) measurement. In the constant voltage measurement, pressure in an electrolytic cell was continuously measured. Further, gas in the cell after the above-described measurement was measured by gas chromatography to evaluate the gas property.

Anhydrous liquid ammonia and $KNH_2$ as an electrolyte were placed into an electrolytic cell (hereinafter referred to as "cell" briefly). Stainless steel cell for high pressure (2 electrodes) was used as the electrolytic cell. The electrodes were made of platinum plates (20 mm x 20 mm x 0.2 mm). The amount of added anhydrous liquid ammonia was 12 ml, and $KNH_2$ was added to a concentration of 1 M. The temperature of ammonia was 25°C. The size of the electrodes immersed below the liquid surface was 10 mm x 10 mm x 0.2 mm.

(Constant Voltage Measurement)

Anhydrous liquid ammonia was electrolyzed by applying a voltage of 2 V to the electrodes for 10 hours to carry out constant voltage measurement. The measurement was carried out at room temperature (about 25°C).

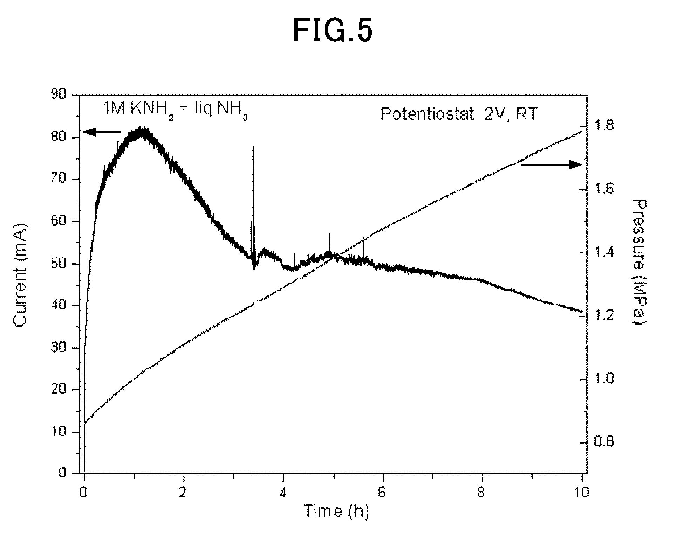

FIG. 5 shows change with time in electric current and pressure in the cell. It can be seen that electric current flows continuously for 10 hours. Further, since the pressure in the cell is linearly increasing, it can be seen that gas is generated continuously.

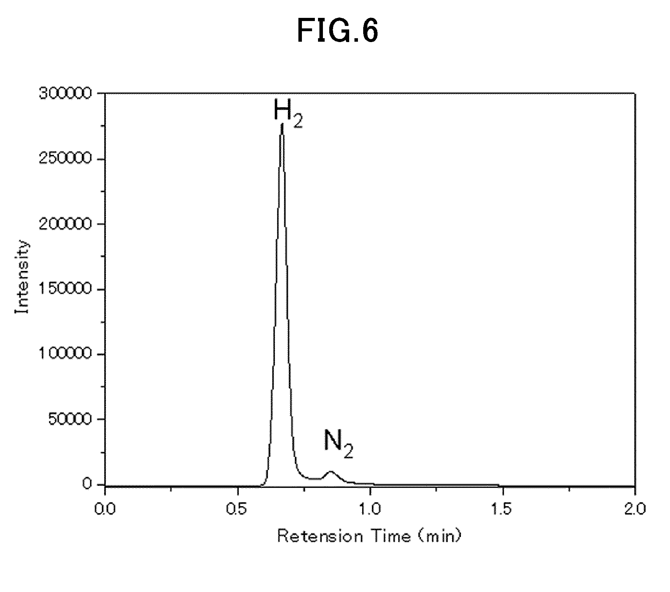

FIG. 6 shows a measurement result of gas chromatography of gas in the cell. As seen from FIG. 6, the peak of hydrogen ($H_2$) was observed to confirm that hydrogen was generated in the cell.

(CV Measurement)

Anhydrous liquid ammonia and the like were placed into a cell to carry out CV measurement in the same manner as described above. The scanning speed was 1 mV/S and the scanning range was 0 to 2.0 V in the CV measurement, and the measurement was repeated 3 times. Counter electrode (CE) and Reference electrode (RE) were platinum plates.

(Example 2)

The CV measurement was carried out in the same conditions as in Example 1 except that the amount of added $KNH_2$ was 5 M.

(Comparative Example 1)

The CV measurement was carried out in the same conditions as in Example 1 except that water and KOH to a concentration of 1 M as an electrolyte were added to a cell instead of ammonia and $KNH_2$.

(Comparative Example 2)

The CV measurement was carried out in the same condition as in Example 1 except that water and KOH to a concentration of 5 M as an electrolyte were added to a cell instead of ammonia and $KNH_2$.

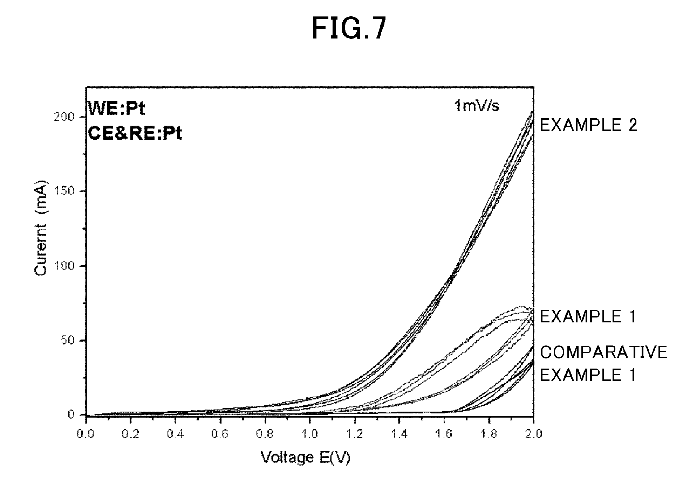

FIG. 7 shows a chart of CV measurement in Example 1, 2 and Comparative Example 1. The amounts of generated hydrogen were calculated respectively from the results of CV measurement in Example 1, 2 and Comparative Example 1, 2. Table 1 shows the amounts of generated hydrogen in Example 1 and Comparative Example 1, and Table 2 shows the amounts of generated hydrogen in Example 2 and Comparative Example 2. The amounts of hydrogen were calculated assuming that all the flowed electric currents were used for decomposing ammonia and water.

[Table 1]

| | Example 1 (anhydrous liquid ammonia + 1M $KNH_2$) | | Comparative Example 1 (water + 1M KOH) | |
|---|---|---|---|---|
| Voltage | Electric current | Generated hydrogen amount | Electric current | Generated hydrogen amount |
| 1.5 V | 30 mA | $3.7 \times 10^{-3}$ ml/sec | 2 mA | $2.5 \times 10^{-4}$ ml/sec |
| 2.0 V | 70 mA | $8.7 \times 10^{-3}$ ml/sec | 50 mA | $6.2 \times 10^{-3}$ ml/sec |

[Table 2]

| | Example 2 (anhydrous liquid ammonia + 5M $KNH_2$) | | Comparative Example 2 (water + 5M KOH) | |
|---|---|---|---|---|
| Voltage | Electric current | Generated hydrogen amount | Electric current | Generated hydrogen amount |
| 0.1 V | 4 mA | $5.0 \times 10^{-4}$ ml/sec | - | - |
| 0.5 V | 5 mA | $6.2 \times 10^{-4}$ ml/sec | - | - |
| 2.0 V | 300 mA | $3.7 \times 10^{-2}$ ml/sec | 200 mA | $2.7 \times 10^{-2}$ ml/sec |

Thus, it can be seen that in cases where hydrogen is generated by the electrolysis of anhydrous liquid ammonia, generation efficiency of hydrogen is clearly better than that of the electrolysis of water. In particular, in cases where $KNH_2$ is added to anhydrous liquid ammonia to a concentration of 5 M, even when the applied voltage is as low as 0.1 V, the electrolysis can be carried out, and hydrogen can be generated.

In the present invention, various embodiments and modifications can be carried out without departing from the broad spirit and scope of the present invention. The above-described embodiments were to explain the present invention, and were not intended to limit the scope of the present invention.

The present application is based on Japanese Patent Application No. 2010-070275 filed on 25 March, 2010. The description, claims and drawings of Japanese Patent Application No. 2010-070275 are hereby incorporated by reference in its entirety.

Industrial Applicability

As explained above, hydrogen can be generated by using anhydrous liquid ammonia as a hydrogen source, and the generated hydrogen can be utilized as a fuel of fuel cells, hydrogen engines and the like. Therefore, the present invention can be utilized in various industrial fields such as a fuel-cell-powered automobile, a hydrogen engine automobile, a generating equipment and the like.

Description of Reference Numerals

|  |  |
|---|---|
| 10 | Hydrogen generator |
| 11 | Power source |
| 12 | Electrolytic tank |
| 13 | Positive electrode |
| 14 | Negative electrode |
| 15 | Hydrogen supply line |
| 16 | Anhydrous liquid ammonia |
| 21 | Oxygen tank |
| 22 | Oxygen supply line |
| 30 | Electric generator |
| 31 | Redox reactor |
| 32 | Negative electrode |
| 33 | Positive electrode |
| 34 | Water |
| 40 | Electric apparatus |
| 50 | Hydrogen engine |
| 51 | Rotor |
| 52 | Ignition device |
| 53 | Shaft |
| 54 | Housing |

**Claims**

1.    A method for generating hydrogen, said method comprising electrolyzing liquid ammonia to which an electrolyte was added to generate said hydrogen.

2.    The method for generating hydrogen according to claim 1, wherein said electrolyte is a metal amide.

3.    The method for generating hydrogen according to claim 2, wherein said metal amide is potassium amide.

4.    The method for generating hydrogen according to claim 3, wherein said potassium amide is added to a concentration of not less than 1 M and not more than 8 M.

5.    A method for utilizing hydrogen, said method comprising generating electricity by electrochemical reaction between oxygen and hydrogen generated by the method for generating hydrogen according to any one of claims 1 to 4.

6.    An electric generating system comprising a hydrogen generator in which hydrogen is generated by the method for generating hydrogen according to any one of claims 1 to 4; and an electric generator in which electricity is generated by electrochemical reaction between oxygen and the generated hydrogen.

# FIG.1

# FIG.2

# FIG.3

# FIG.4

# FIG.5

# FIG.6

# FIG.7

**INTERNATIONAL SEARCH REPORT**

| International application No. |
|---|
| PCT/JP2011/057360 |

A. CLASSIFICATION OF SUBJECT MATTER
*C25B1/02*(2006.01)i

According to International Patent Classification (IPC) or to both national classification and IPC

B. FIELDS SEARCHED

Minimum documentation searched (classification system followed by classification symbols)
C25B1/02

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho    1971-2011     Toroku Jitsuyo Shinan Koho     1994-2011

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| Y | Bryan K. Boggs, On- board hydrogen storage and production: An application of ammonia electrolysis, Journal of Power Sources, 2009.07.15, Vol.192 No.2, 573-581 | 1-6 |
| Y | JP 48-44728 A (Japan Storage Battery Co., Ltd.), 27 June 1973 (27.06.1973), page 1, right column, lines 6 to 10 (Family: none) | 1-6 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 May, 2011 (17.05.11) | 24 May, 2011 (24.05.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/057360

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2005-525461 A　(A.T.S. Electro-Lube Holdings Ltd.),<br>25 August 2005 (25.08.2005),<br>paragraph [0026]<br>& US 2003/0146104 A1　　& US 2005/0067276 A1<br>& US 2004/0232003 A1　　& EP 1472389 A<br>& WO 2003/064726 A2　　& CA 2474786 A | 1-6 |
| Y | JP 2003-252819 A　(Asahi Kasei Corp.),<br>10 September 2003 (10.09.2003),<br>paragraph [0010]<br>(Family: none) | 1-6 |
| Y | JP 2006-179195 A　(The Chugoku Electric Power Co., Inc.),<br>06 July 2006 (06.07.2006),<br>paragraphs [0024] to [0031]; fig. 1<br>(Family: none) | 5,6 |

Form PCT/ISA/210 (continuation of second sheet) (July 2009)

**REFERENCES CITED IN THE DESCRIPTION**

**Patent documents cited in the description**

- JP 2010053383 A

- JP 2010070275 A